# EUROPÄISCHE PATENTSCHRIFT

(11) **EP 0 685 042 B1**
(45) Veröffentlichungstag und Bekanntmachung des Hinweises auf die Patenterteilung: **23.04.1997**
(21) Anmeldenummer: 94906829.0
(22) Anmeldetag: 04.02.1994
(51) Int. Cl.: F16B 13/12, E04F 13/08

(54) **BEFESTIGUNGSEINRICHTUNG FÜR EIN NICHT DURCHGEHENDES HINTERSCHNITTENES BOHRLOCH**
SECURING DEVICE FOR A BLIND UNDERCUT HOLE
DISPOSITIF DE FIXATION POUR UN TROU PERCE NON TRAVERSANT CONTRE-DEPOUILLE

(30) Priorität: 17.02.1993 DE 9302257 U; 07.05.1993 DE 9306937 U
(43) Veröffentlichungstag der Anmeldung: 06.12.1995
(73) Patentinhaber: Eischeid, Karl, 51766 Engelskirchen (DE)
(72) Erfinder: Eischeid, Karl, 51766 Engelskirchen (DE)
(74) Vertreter: Eichler, Peter, Dipl.-Ing.
(86) Internationale Anmeldenummer: DE9400107
(87) Internationale Veröffentlichungsnummer: WO9419613

(56) Entgegenhaltungen:
- EP-A- 0 439 706
- EP-A- 0 452 746
- DE-A- 1 450 932
- DE-A- 2 652 630
- DE-A- 3 442 547
- DE-U- 8 802 421
- DE-U- 9 214 581
- GB-A- 562 444
- US-A- 2 344 717
- US-A- 4 391 559

## Beschreibung

Die Erfindung bezieht sich auf eine Befestigungseinrichtung in einem nicht durchgehenden hinterschnittenen Bohrloch eines sprengkraftempfindlichen Bohrlochträgers, wie einer dünnen Keramikplatte, in deren Bohrloch ein bohrungssohlenseitig längsgeschlitzter Dübel angeordnet ist, der an seinem inneren Ende mit der Form der Hinterschneidung des Bohrlochs entsprechenden Spreizlappen versehen ist und der eine koaxiale Bohrung zum Einbringen eines Bolzens aufweist, der die Spreizlappen praktisch über deren gesamte Länge abstützt.

Eine ähnliche Befestigungseinrichtung ist aus EP- 0 336 183 bekannt. Sie ist für die Befestigung eines Gewindebauteils bestimmt. Dementsprechend weist der Dübel bzw. seine Bohrung ein Innengewinde auf, in das das Gewindebauteil hineingeschraubt wird. Dabei werden die zum Einstecken in das Bohrloch zusammengedrückten Spreizlappen des Dübels gespreizt, soweit die Elastizität des Werkstoffs des Dübels nicht für eine selbsttätige Spreizung der Spreizlappen bei eingestecktem Dübel sorgt. Beim Einschrauben des Gewindebauteils tritt dieses während des Spreizens in eine Kraftwechselwirkung mit dem Dübel. Die Vorderkante des Gewindebauteils drückt auf nicht gespreizte Bereiche des Dübels. Infolgedessen kann es dazu kommen, daß der bereits erfolgte Gewindeeingriff zwischen dem Gewindebauteil und dem Dübel beeinträchtigt wird und die Spreizung der Spreizlappen nicht oder nur unvollständig erfolgt. Das ist insbesondere der Fall, wenn der Dübel nicht genügend tief hineingesteckt wurde, oder wenn sich irgendwelche Herstellungstoleranzen des Bohrlochs auswirken, dieses also radial und/oder axial nicht tief genug ist. In solchen Fällen ist nicht auszuschliessen, daß das bekannte Gewindebauteil nicht tief genug eingeschraubt wird. Ein solcher Mangel muß nicht ohne weiteres auffallen, weil das Gewindebauteil bestimmungsgemäß aus dem Bohrloch vorsteht, um an ihm einen Montagegegenstand zu befestigen, beispielsweise eine Halteplatte, die mittels einer Gewindemutter mit dem Bohrlochträger zusammengespannt wird. Dabei kann es zu einer nicht genügend festen und infolgedessen nicht ausreichend tragenden Verbindung zwischen dem Bohrlochträger und dem Montagegegenstand kommen. Ferner kann es auch zu einer Beschädigung des Bohrlochträgers kommen, wenn nämlich das Gewindebauteil mit übergroßer Gewalt in den Dübel hineingeschraubt wird und dieser den Bohrlochträger sprengt, weil er entsprechend empfindlich ist. Solche Empfindlichkeiten sind insbesondere gegeben, wenn der Bohrlochträger eine dünne Platte ist, für die die Befestigungseinrichtung vor allem bestimmt ist. Der Bohrlochträger kann also eine Keramikplatte sein, die durch unsachgemäßen Gebrauch der bekannten Befestigungseinrichtung zu Bruch gehen kann.

Eine Befestigungseinrichtung mit den eingangs genannten Merkmalen ist aus DE-U 9 214 581 bekannt. Das Bohrloch des Dübels ist ebenfalls mit einem Innengewinde versehen, in das ein Gewindebolzen eingeschraubt wird, der einen Sechskantkopf hat, mit dem der Gewindebolzen eingeschraubt wird. Es wird ein Drehmoment-Schraubschlüssel verwendet, um die auf die Lochleibung ausgeübten Kräfte auf ein unschädliches Maß zu beschränken. Gleichwohl kann der Bohrlochträger zu Bruch gehen, wenn nicht sachgemäß eingebaut wird, z.B. durch nicht genügend tiefes Einsetzen der Spreizhülse.

Aus der DE-A 3 442 547 ist ein Kerbnagel bekannt, der mit Hilfe eines glatten Stifts in eine Bohrung des Kerbnagels eingetrieben wird, wobei sich der Stift an einem Innenabsatz der Bohrung abstützt, um den Kerbnagel zu spreizen. Ein derartiger Kerbnagel ist wegen seiner Spreizwirkung während des Eintreibens bei sprenngkraftempfindlichen Werkstoffen nicht zu verwenden.

Demgegenüber liegt der Erfindung die Aufgabe zugrunde, eine Befestigungseinrichtung mit den eingangs genannten Merkmalen so zu verbessern, daß sie bei dünnen Platten als Bohrlochträger eine zuverlässige und leichter überwachbare Befestigungsmöglichkeit bietet, die einfacher zu montieren ist.

Diese Aufgabe wird dadurch gelöst, daß der Dübel eine glatt durchgehende Bohrung aufweist und daß der Bolzen ein auf seiner Mantelfläche gewindefreier glatter Einschlagbolzen ist, dessen äußeres Ende mit dem äußeren Dübelende axial etwa gleichliegend angeordnet ist.

Für die Erfindung ist von Bedeutung, daß der Bolzen als Einschlagbolzen eine glatte Mantelfläche hat. Er kann infolgedessen durch einfaches Einschlagen in den Dübel eingetrieben werden. Dabei spreizt er die Spreizlappen des Dübels, sofern diese nicht in die Hinterschneidung gefedert sind, und hält die Spreizlappen in den Hinterschneidungen des Bohrlochs, wenn er vollständig eingetrieben ist, wenn also sein äußeres Ende mit dem äußeren Dübelende fluchtet. Falls der Dübel nicht vollständig in das Bohrloch hineingesteckt wurde, geschieht das vollständige Eintreiben des Dübels zugleich mit dem Einschlagen des Bolzens. Dabei wirkt sich eine Schräge der Hinterschneidung begünstigend aus. Die dabei auftretenden Reibungen zwischen der Mantelfläche des Bolzens und der Innenwand des Bohrlochs des Dübels sind groß genug, um letzteren axial einzutreiben. Ein axialer Formschluß zwischen dem Bolzen und dem Dübel, verglichen mit dem Gewindeeingriff des bekannten Gewindebauteils in das Innengewinde des bekannten Dübels, findet dabei nicht statt. Der Dübel dient hier also nicht als Widerlager für die Verstellbewegung des Bolzens. Diese Entkopplung ermöglicht damit eine vorteilhafte Verstellung des Dübels beim Einschlagen des Bolzens. Darüber hinaus kann das Einschlagen des Bolzens sehr viel schneller erfolgen, als das Einschrauben eines Gewindebauteils. Der Einsatz eines Schraubenschlüssels ist nicht erforderlich. Sollte die Hinterschneidung des Bohrlochs nicht die für die Spreizlappen erforderlichen Abmessungen haben, so läßt sich der Bolzen nicht vollständig einschlagen und es ist ohne weiteres ersichtlich, daß die Befestigung nicht mit der gewünschten Qualität hergestellt wurde.

Zweckmäßigerweise ist der Dübel knapp bohrungslang und der Bolzen knapp dübellang. Damit wird erreicht, daß der Dübel bzw. seine Spreizlappen praktisch über die gesamte Länge abgestützt werden, jedenfalls aber in dem Bereich, in dem sich die Spreizlappen an dem dübeleinsteckseitigen Wandabschnitt der Hinterschneidung abstützen. Infolge der knappen Bemessung der Länge des Bolzens wird auch erreicht, daß dessen sohlenseitiges Ende einen etwas größeren Abstand von der Bohrungssohle hat, als der Dübel. Der Bolzen kann infolgedessen nicht auf die Bohrungssohle geschlagen werden und dort den Bohrlochträger zerstören, also beispielsweise die dünne keramische Platte.

Von besonderem Vorteil ist es, wenn der Dübel an seinem äußeren Dübelende einen Ringkragen aufweist, der bedarfsweise radial weiter vorspringt, als die Spreizlappen des Dübels. Der Ringkragen bedeutet einen am gesamten Dübelumfang über diesen radial vorstehenden Vorsprung. Wenn der Dübel z.B. durch eine Bohrung des Montagegegenstands hindurchgesteckt wurde, kann sich der Ringkragen sicher an diesem Montagegegenstand abstützen. Der an allen Umfangsstellen des Dübels gleichermaßen vorspringende Ringkragen gewährleistet auch eine Abstützung an solchen Montagegegenständen, die nicht im gleichen Maße axial symmetrisch ausgebildet sind, sondern beispielsweise eine vierkantige Durchsteckausnehmung aufweisen.

Wenn die Befestigungseinrichtung für Platten eingesetzt werden soll, beispielsweise für Keramikplatten der Größe 60 x 60 cm, die darüber hinaus sehr dünn sein können, nämlich weniger als 12 mm dick, so wird die Befestigungseinrichtung so ausgestaltet, daß der Ringkragen des Dübels eine mit einem Bohrlochträger zu verbindende Halterung hintergreift. Beispielsweise werden vier Befestigungseinrichtungen verwendet, um eine Platte mit vier Halterungen an einer Untergrundkonstruktion zu befestigen.

Um den Bohrlochträger gegenüber der Halterung elastisch abzufedern und um die gesamte Befestigungseinrichtung unter Spanndruck zu halten, ist sie so ausgebildet, daß zwischen dem Bohrlochträger und der Halterung eine elastische Zwischenlage angeordnet ist, mit der die Halterung gegen den Ringkragen des in den Bohrlochträger eingesetzten Dübels gedrückt ist. Die elastische Zwischenlage ist also dicker, als der ihr zwischen dem Bohrlochträger und der Halterung zur Verfügung stehende Raum. Sie wird daher zusammengedrückt, wenn der Bolzen in den Dübel eingeschlagen wird, der dabei in seine Endlage innerhalb des Bohrlochs gelangt, wobei er mit seinem Ringkragen die Halterung gegen die am Bohrlochträger angestützte elastische Zwischenlage drückt.

Ferner kann die Befestigungseinrichtung so ausgebildet werden, daß die Längsschlitze des Dübels außerhalb der Dicke des Ringkragens enden. Infolgedessen wird der Ringkragen nicht durch Längsschlitze geschwächt bzw. unterbrochen. Andererseits werden die durch die Längsschlitze gebildeten Spreizlappen des Dübels nicht durch Abschnitte des Ringkragens versteift, was beim Zusammendrücken, vor allem aber beim Spreizen der Spreizlappen durch den Bolzen hinderlich sein könnte.

Es wird in der Regel so sein, daß der Bolzen in seiner Eintreiblage im Dübel nicht besonders gesichert werden muß. Der Bolzen sitzt klemmend im Dübel. Es kann jedoch Sonderfälle geben, in denen aus Gründen erhöhter Sicherheit besondere Maßnahmen getroffen werden müssen, um zu gewährleisten, daß der Bolzen auch bei widrigen Umständen nicht aus dem Dübel heraus kann.

Eine leicht herstellbare Ausgestaltung des Bolzens zur Sicherung seiner Lage im Dübel liegt dann vor, wenn der Bolzen an seinem äußeren Ende in den Dübel eingrabbare Kerbvorsprünge aufweist. Die Kerbvorsprünge greifen in den Werkstoff des Dübels ein und verhindern ohne weiteres, daß der Bolzen der Einschlagrichtung entgegen verlagert werden kann.

Die einfachste Form des Bolzens ist eine zylindrische Form. Um diese Bolzenform herzustellen, wird Stangenwerkstoff abgelängt. Solche zylindrischen Bolzen können in ihrer Einschlaglage gesichert werden, wenn der Bolzen mit dem Dübel verklebt ist.

Wenn die besondere Problematik des Einsatzes eines Bolzens darin besteht, daß er keinesfalls zu tief eingetrieben werden darf, weil er dann beispielsweise eine Sprengwirkung entfaltet, ist die Befestigungseinrichtung so ausgebildet, daß der Bolzen an seinem äußeren Ende einen radial vorspringenden Tiefenanschlag hat, dessen Außendurchmesser dem Außendurchmesser des Ringkragens des Dübels entspricht. Der Tiefenanschlag gewährleistet, daß der Bolzen höchstens in seine Sollage eingetrieben werden kann, nicht aber darüber hinaus. Der Tiefenanschlag gewährleistet auch ohne weiteres eine optische Kontrolle darüber, ob der Bolzen eventuell nicht tief genug in den Dübel eingetrieben wurde. Der Tiefenanschlag hat darüber hinaus den weiteren Vorteil, daß er für eine Verklebung des Bolzens mit dem Dübel herangezogen werden kann, insbesondere wenn er tellerförmig ausgebildet ist. Es braucht dann kein Klebstoff in die Bohrung hineingegeben werden, vielmehr genügt das Auftragen des Klebstoffs auf die dem Tiefenanschlag zugewendete Anlagefläche oder auf die Dübelanlagefläche des Tiefenanschlags, die dann optimal groß ist, wenn die beiden Außendurchmesser des Tiefenanschlags und des Ringkragens gleich groß sind.

Um eine Lagesicherung des Bolzens im Dübel auch dann zu erreichen, wenn der Bolzen nicht mit dem Dübel verklebt oder nicht formschlüssig mit dem Dübel verbunden wird, kann die Befestigungseinrichtung so ausgebildet werden, daß eine den Bolzen übergreifende, bedarfsweise mit ihm und/oder mit dem Ringkragen verklebte Sicherungskappe vorhanden ist, die mit dem Ringkragen des Dübels verrastet ist. Die Verrastung der Sicherungskappe mit dem Dübel gewährleistet ein Abstützen des Bolzens gegen ein Ausrücken des Bolzens aus seiner Sollage.

Die Einrichtung kann so ausgebildet werden, daß der Bolzen an seinem inneren Ende einen flachen Ringvorsprung hat, der in Einbaulage des Bolzens in eine am inneren Ende des Dübels vorhandene Ringnut einschnappt. Es ergibt sich eine in axialer Richtung formschlüssige Verbindung zwischen dem Bolzen und dem Dübel, welche der zuverlässigen Lagesicherung des Bolzens dient. Die Schnappverbindung kann aufgrund einer engen Tolerierung erreicht werden, bei der der Ringvorsprung unter überwindung von Klemmkräften des Dübels bis in seine ordnungsgemäße Stellung eingetrieben wird, in der der Ringvorsprung in die Ringnut einschnappt. Die Schnappverbindung kann aber auch so ausgebildet werden, daß der Bolzen ohne die Überwindung von Klemmkräften des Dübels in seine Einbaustellung einschiebbar ist, in der auf den Dübel einwirkende Befestigungskräfte für den axialen formschlüssigen Sitz des Ringvorsprungs des Bolzens in der Ringnut des Dübels sorgen. In diesem Fall ist es zweckmäßig, die Einrichtung so auszubilden, daß die den Ringvorsprung aufweisende Hälfte des aus Metall bestehenden Bolzens etwas konisch ist. Der konische Teil des Bolzens erlaubt es, einander gegenüberliegende Bereiche des Dübels zusammen zu drücken, bis sie auf der Konusfläche des Bolzens aufliegen, so daß der Ringvorsprung hintergriffen wird.

Die Erfindung wird anhand eines in der Zeichnung dargestellten Ausführungsbeispiels erläutert. Es zeigt:
- Fig. 1: einen Querschnitt durch einen Dübel für eine erfindungsgemäße Befestigungseinrichtung,
- Fig.2,3 und 4: unterschiedliche Ausgestaltungen von Bolzen,
die mit einem Dübel gemäß Fig.1 zusammenzubauen sind,
- Fig.5: einen Querschnitt durch eine komplett montierte Befestigungseinrichtung einer dünnen Keramikplatte,
- Fig.6: einen Querschnitt durch einen weiteren erfindungsgemäßen Dübel,
- Fig.7: einen mit dem Dübel der Fig.6 zusammenwirkenden Bolzen, und
- Fig.8: eine der Fig.5 entsprechende Zusammenbauzeichnung des Dübels der Fig.6 und des Bolzens der Fig.7.

Häufig müssen mit der Einrichtung Bauteile befestigt werden, welche die Befestigung beeinträchtigende Toleranzen aufweisen. Auch ist es wünschenswert, die Einrichtung so auszubilden, daß sie einen vergleichsweise großen Einsatzbereich hat, also mit unterschiedlich dimensionierten Bauteilen zusammenwirken soll. Um das zu ermöglichen, wird die Einrichtung so ausgebildet, daß der Ringkragen 21 des Dübels 12 ein Gewinde 44 hat, auf dem eine Spannmutter 45 dübelachsparallel zum Festspannen der Halterung 23 am Bohrlochträger 22 schraubverstellbar ist. Infolge der Verstellbarkeit der Spannmutter auf dem Gewinde des Dübels können größere axiale Toleranzen und Abstände durch Verstellung der Spannmutter berücksichtigt werden, ohne daß es dazu eine Abänderung der Einrichtung bedürfte.

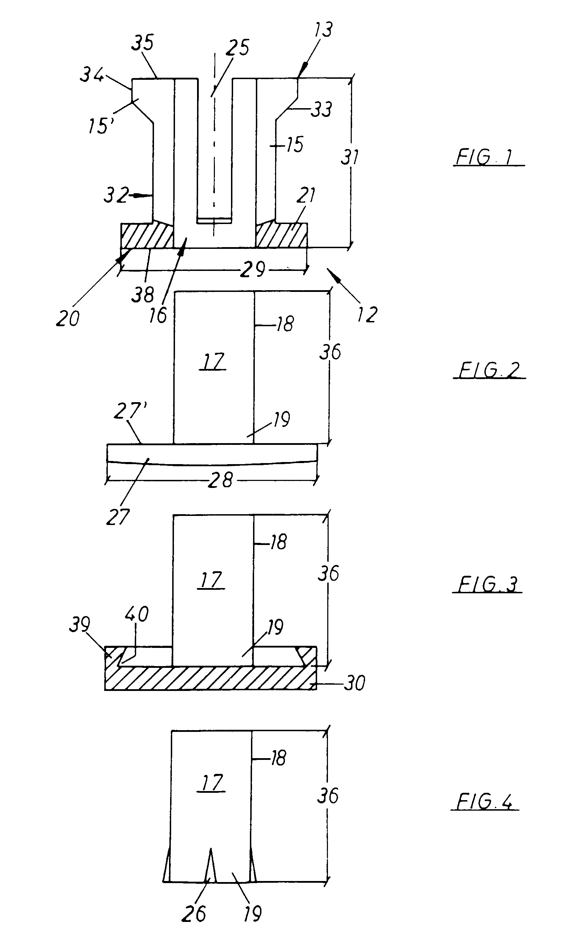

Der in Fig.1 dargestellte Dübel 12 besteht im wesentlichen aus einem hohlzylinderartigen Schaft 32 mit einer glatt durchgehenden Bohrung 16. Am äußeren Dübelende 20 ist ein Ringkragen 21 vorgesehen, der rund um den Außenumfang in gleichem Maße radial vorspringt. Das andere, innere Ende 13 des Dübels 12 hat vier Längsschlitze 25, die zu den jeweils benachbarten Längsschlitzen den gleichen Abstand aufweisen. Die Längsschlitze 25 sind also über den Umfang gleichmäßig verteilt. Sie ragen achsparallel bis in die Nähe des Ringkragens 21, jedoch ohne in diesen einzudringen. Hierdurch entstehen vier Spreizlappen 15, die im Bereich des Endes 13 des Dübels 12 mit radialen Vorsprüngen 15' versehen sind. Diese Vorsprünge 15' bilden die Form eines durch die Längsschlitze 25 unterteilten Ringkragens, der konische Übergangsflächen 33 zwischen dem größten Außendurchmesser 34 der Vorsprünge 15 und dem Durchmesser des Schafts 32 in seinem zylinderartigen Bereich aufweisen. Das innere Dübelende 13 hat eine Innenendfläche 35, die der Außenendfläche 38 des äußeren Dübelendes 20 parallel ist.

Die in den Fig.2 bis 4 dargestellten Bolzen 17 zeichnen sich sämtlich dadurch aus, daß sie eine glatte Mantelfläche 18 haben. Der Durchmesser der Bolzen 17 bzw. der Mantelfläche 18 entspricht dem Durchmesser der Bohrung 16 des Dübels 12 derart, daß der Bolzen 17 in die Bohrung 16 satt eingeschoben werden kann.

Der Bolzen 17 ist knapp dübellang. Seine Länge 36 ist etwas geringer, als die Dübellänge 31 und zwar etwa um 0,5 mm. Ferner hat das innere Dübelende 13 bzw. dessen Innenendfläche 35 einen Abstand von z.B. 0,5 mm von der Bohrungssohle 41. Diese Bemessungen genügen für einen Bolzendurchmesser von z.B. 5 mm. In der vollständigen Einbaulage des Bolzens 17 ist das innere Bolzenende 42 von der Bohrungssohle 41 noch genügend entfernt, so daß gewährleistet wird, daß auch ein geringfügig zu tiefes Einschlagen des Bolzens 17 in den Dübel 12 nicht zu einer Zerstörung des Bohrlochträgers 22 führt.

Darüber hinaus unterscheiden sich die Bolzen 17 der Fig.2 bis 4 wie folgt: Der Bolzen 17 der Fig.2 hat an seinem äußeren Ende 19 einen Tiefenanschlag 27. Dieser ist tellerförmig ausgebildet und hat einen Außendurchmesser 28, der dem Außendurchmesser 29 des Ringkragens 21 des Dübels 12 entspricht. Der Tiefenanschlag 27 gewährleistet, daß der Bolzen 17 nicht zu tief in den Dübel 12 eingeschlagen werden kann. Er ermöglicht ferner die Kontrolle, ob der Bolzen 17 tief genug in den Dübel 12 eingeschlagen worden ist, nämlich dadurch, daß die dichte, fugenlose Anlage des Tiefenanschlags 27 am Ringkragen 21 festgestellt wird. Ferner kann die Anschlagfläche 27' des Tiefenanschlags 27 zugleich dazu benutzt werden, eine zusätzliche Lagesicherung des mit dem Tiefenanschlag 27 einstückigen Bolzens 17 zu erreichen, indem diese Anschlagfläche 27 mit der Außenendfläche 38 des äußeren Dübelendes 20 verklebt wird.

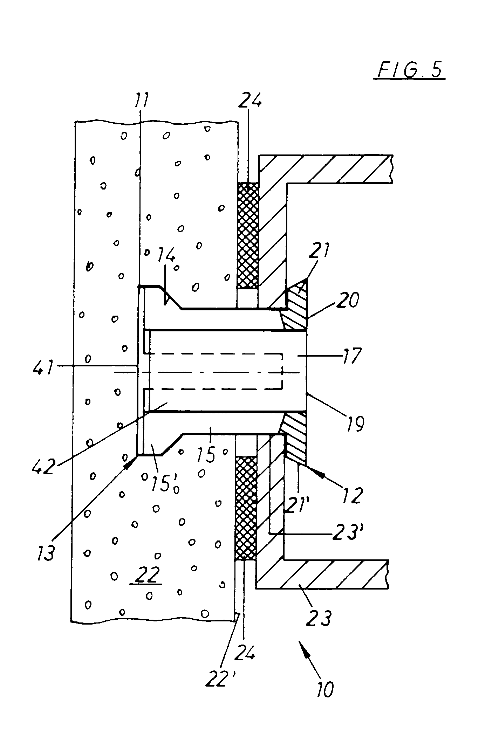

Der in Fig.3 dargestellte Bolzen 17 wird in Verbindung mit einer Sicherungskappe 30 verwendet, die einen bolzenachsparallelen Schnapprand 39 hat, der ringförmig ausgebildet ist und den Ringkragen 21 des Dübels 12 übergreifen kann. Die den Schnapprand 39 bildende Wand ist am freien Randende breiter, als in ihren inneren Bereichen, so daß eine entsprechend ringförmige Hinterschneidung 40 entsteht. Infolgedessen kann die Sicherungskappe 30 mit dem Ringkragen 21 formschlüssig gut verbunden werden, insbesondere wenn der Ringkragen entsprechend konisch ausgebildet ist, wie es Fig.5 im Bereich des Außenumfangs 21' des Ringkragens 21 dargestellt wurde. Auch hier kann ein verbesserter fester Sitz des Bolzens 17 im Dübel erreicht werden, wenn die Sicherungskappe 30 mit dem Bolzen und/oder mit dem Ringkragen 21 des Dübels verklebt ist.

Der in Fig.4 dargestellte Bolzen 17 ist an seinem äußeren Ende 19 mit gleichmäßig um den Außenumfang herum verteilten Eingrabkerben 26 versehen. Diese dringen beim Einschlagen des Bolzens 17 in den Werkstoff des Dübels 12 und verkrallen sich dort, so daß der feste Sitz des Bolzens 17 im Dübel 12 gesichert ist.

Die Werkstoffe des Dübels 12 und des Bolzens 17 werden den jeweiligen Anforderungen entsprechend ausgewählt. Falls der den Dübel 12 aufnehmende Bohrlochträger aus einem empfindlichen, beispielsweise bruchempfindlichen Werkstoff besteht, wird der Dübel 12 beispielsweise aus einem geeigneten Kunststoff hergestellt, der die erforderliche Nachgiebigkeit aufweist. Es ist jedoch auch möglich, metallene Dübel zu verwenden, die beispielsweise aus Aluminium oder einer Aluminiumlegierung oder aus Messing oder aus Edelstahl hergestellt sind. Diese Werkstoffe müssen einerseits genügend elastisch sein, damit man den Schaft 32 bzw. die Spreizlappen 15 der Dübel 12 verformen kann, um sie trotz ihrer Vorsprünge 15' in ein Bohrloch des Bohrlochträgers hineinschieben zu können, in dem sie dann wieder auseinandergebogen werden, wenn der Bolzen 17 in den Dübel 12 eingetrieben wird. Außerdem muß der Dübelwerkstoff genügend zäh sein, um das Verformen bruchfrei zu überstehen und um auch die geforderte Zuglast aufzuweisen, die erforderlich ist, damit die Befestigungsverbindung dauerhaft hält. Darauf abgestimmt ist auch der Werkstoff des Bolzens 17 auszusuchen, der vor allem genügend schlagzäh sein muß. Auch für diesen Werkstoff kommen Kunststoffe, Aluminiumwerkstoff und Edelstahlwerkstoffe in Frage.

Fig.5 zeigt eine Befestigungseinrichtung 10, die in ein hinterschnittenes Bohrloch 11 eines Bohrlochträgers 22 eingebaut ist. Dieser Bohrlochträger ist eine Keramikplatte. Das in ihr befindliche Bohrloch 11 ist mit einer Hinterschneidung 14 versehen, also mit einer innenliegenden Radiuserweiterung. Ein solches hinterschnittenes Bohrloch 11 kann beispielsweise mit einer in der DE 38 11 249 A1 beschriebenen Vorrichtung hergestellt werden. Bei der Herstellung ergibt sich eine ebene bzw. fast ebene Bohrlochsohle 41, um die Restwanddicke des Bohrlochträgers 22 möglichst groß zu halten. Dementsprechend ist das Bohrloch 11 im übrigen so bemessen, daß der in es einzusetzende Dübel 12 mit seinem inneren Ende 13 der Bohrlochsohle 41 dicht benachbart ist.

Der Dübel 12 verspannt infolge des Eingriffs seines Vorsprungs 15' in die Hinterschneidung 14 gemeinsam mit dem Ringkragen 21 eine Halterung 23 und eine elastische Zwischenlage 24 an der Innenfläche 22' des Bohrlochträgers 22. Die Halterung 23 ist als allgemeines Bauteil zu verstehen, mit der der Bohrlochträger 22 gehalten werden soll. Hierzu wird die Halterung 23 mit einer nicht dargestellten Unterkonstruktion z.B. an einer Gebäudeaußenwand verbunden. Eine Ausnehmung 23', beispielsweise eine Bohrung, muß so groß sein, daß das innere Dübelende 13 mit seinen Spreizlappen 15 hindurchgesteckt werden kann. Hierzu genügt ein Bohrungsdurchmesser, der dem des Bohrlochs 11 entspricht. Denn beim Einbau des Dübels 12 in das Bohrloch 11 müssen die Spreizlappen 15 soweit zusammengedrückt werden, daß sie sowohl durch das Bohrloch 23' der Halterung 23 als auch durch den halterungsseitigen Bereich des Bohrlochs 11 bis in den Bereich der Hinterschneidung 14 geschoben werden können. Dann liegt der Ringkragen 21 in dargestellter Weise dicht an der Halterung 23. Auf die Halterung 23 wurde zuvor die elastische Zwischenlage 24 aufgebracht, z.B. mit einer elastischen Beschichtung, die es gestattet, die Zwischenlage 24 auf die glatte bohrungsträgerseitige Fläche der Halterung 23 aufzukleben. Es werden gemäß Fig.5 zwei voneinander separate Zwischenlagen 24 verwendet, die zum Dübel 12 einander diagonal gegenüberliegend an der Halterung 23 befestigt werden und beispielsweise als der Halterung 23 entsprechend lange Streifen ausgebildet sind. Es könnte auch ein Ring verwendet werden.

Das vollständige Einstecken des Dübels 12 in das Bohrloch 11 bewirkt zwar, daß die Vorsprünge 15' der Spreizlappen 15 im Bereich der Hinterschneidung 14 angeordnet sind, es ist jedoch noch deren Spreizung erforderlich. Das wird durch Einschlagen des Bolzens 17 in die in Fig.5 dargestellte Lage erreicht. Beim Spreizen der Spreizlappen 15 gelangen die in Fig.1 dargestellten konusförmigen Übergangsflächen 33 zur Anlage an den entsprechend konusförmigen Flächen der in Fig.5 dargestellten Hinterschneidung 14. Beim weiteren Einschlagen des Bolzens 17 gleiten diese Flächen solange aufeinander und ziehen dabei den Dübel 12 nach innen bzw. mit seinem Ringkragen 21 in Richtung auf die Innenfläche 22' des Bohrlochträgers 22, bis die elastischen Zwischenlagen 24 unter Einwirkung der Halterung 23 zusammengedrückt sind. Hat der Bolzen 17 die in Fig.5 dargestellte Endlage erreicht, so setzen die elastischen Zwischenlagen 24 die Halterung 23 unter Druck, der sich über die Ringkragen 21 auf den Dübel 12 überträgt, der unter Zugspannung steht. Die Spreizlappen 15 drücken infolge der konusförmigen Übergangsflächen 33 radial auf den Bolzen 17 und halten diesen am inneren Bolzenende fest. Die zutreffende Lage des Bolzens 17 ist ohne weiteres kontrollierbar, weil das äußere Ende 19 des Bolzens 17 mit dem äußeren Dübelende 20 gleichliegen muß. Die beiden Endflächen müssen also fluchten.

Durch das Einschlagen des Bolzens 17 gelangt der Dübel 12 in die für ihn vorgesehene Einbaulage. Es ist danach keine weitere Maßnahme notwendig, um die Halterung 23 und den Bohrlochträger 22 miteinander zu verbinden. Die Verspannung beider durch die elastischen Zwischenlagen 24 sichert aber nicht nur die vorbestimmte Zusammenbaulage der Halterung 23 und des Bohrlochträgers 22, sondern auch eine gegenseitige Abfederung, die für die Dauerhaltbarkeit der Verbindung insbesondere bei bruchempfindlichen Bohrlochträgern von Bedeutung ist. Die Hinterschneidung 14 und die Vorsprünge 15' der Spreizlappen 15 können kugelgelenkartig zusammenwirken, wenn es die Elastizität des Dübelwerkstoffs bzw. die Toleranzen des Bohrlochs 11 und des Außendurchmessers des Schafts 32 im zylinderartigen Bereich zulassen.

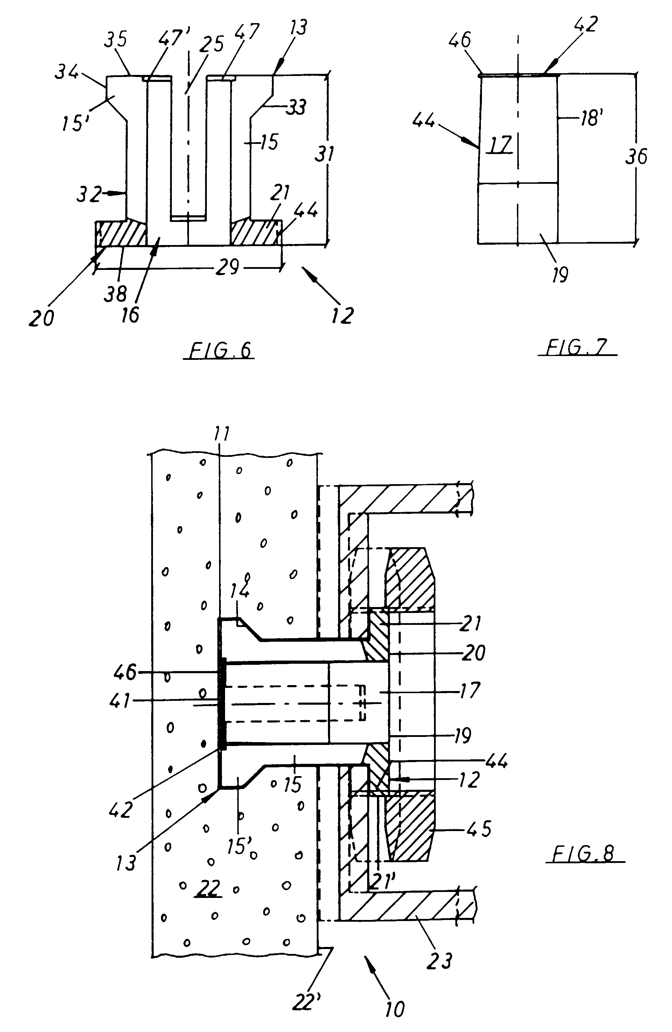

Der in Fig.6 dargestellte Dübel 12 zeichnet sich dadurch aus, daß er an seinem inneren Ende 13, soweit dieses nicht von den Längsschlitzen 25 unterbrochen ist, eine Ringnut 47 aufweist. Der zu diesem Dübel 12 gehörende Bolzen 17 hat gemäß Fig.7 an seinem inneren Ende 42 einen flachen Ringvorsprung 46, der in die Ringnut 47 paßt. Die Bemessung des Bolzens 17 bzw. des Außendurchmessers seines Ringvorsprungs 46 ist derart, daß letzerer unter überwindung elastischer Kräfte des Dübels 12 durch dessen Bohrung 16 eingetrieben wird, bis die gewünschte axiale Schnappverbindung hergestellt wird. Die Bemessung kann aber auch derart sein, daß der Außendurchmesser des Ringvorsprungs 46 gleich dem Bohrungsdurchmesser ist, so daß der Bolzen 17 ohne die Überwindung von Reibungskräften in die Bohrung 16 eingesetzt werden kann. Die Mantelfläche 18' hat ringvorsprungseitig eine konische Ausbildung, so daß die Spreizlappen 15 unter der Wirkung der Befestigung nach innen zurückgebogen werden können, bis der Ringvorsprung 47 mit seiner Radialfläche 47' den Vorsprung 46 hintergreift. Eine solche Ausgestaltung ist insbesondere dann zweckmäßig, wenn der Dübel 12 axialen Kräften ausgesetzt ist, bei denen die konischen Übergangsflächen 33 des Dübels 12 in Zusammenwirkung mit den entsprechenden konischen Flächen der Hinterschneidung 14 zu einem zusammendrücken der Spreizlappen 15 beiträgt.

Die vorbeschriebenen axialen Belastungskräfte des Dübels 12 können insbesondere dann in vorbestimmtem Umfang erzeugt werden, wenn ein Ringkragen 21 des Dübels 12 ein Außengewinde 44 hat, auf das eine Spannmutter 45 dübelachsparallel aufgeschraubt werden kann. Fig.8 zeigt eine solche Konstruktion, bei der zwischen dem Ringkragen 21 des Dübels 12 und einem Bohrlochträger 22 eine Halterung 23 angeordnet ist. Die Anordnung entspricht insoweit der Darstellung in Fig.5. Der Dübel 12 hat Überlänge, das heißt, der Abstand zwischen seinem Ringkragen 21 und der benachbarten Außenfläche des Bohrlochträgers 22 ist wesentlich größer, als es die Dicke der in diesem Bereich befindlichen Halterung 23 erfordert. Infolgedessen ist der Bohrlochträger 22 in Bezug auf eine befestigte Halterung 23 lose. Im Vergleich zur Fig.5 rührt das daher, daß die Zwischenlage 24 weggelassen wurde. Die Spannmutter 45 kann nun solange auf den Kragen 21 aufgeschraubt werden, bis sie und damit auch die Halterung 23 die jeweils gestrichelten Relativstellungen einnehmen, in denen die gewünschte Befestigung ordnungsgemäß erfolgt.

## Patentansprüche

1. Befestigungseinrichtung (10) in einem nicht durchgehenden hinterschnittenen Bohrloch (11) eines sprengkraftempfindlichen Bohrlochträgers, wie einer dünnen Keramikplatte, in deren Bohrloch (11) ein bohrungssohlenseitig längsgeschlitzter Dübel (12) angeordnet ist, der an seinem inneren Ende (13) mit der Form der Hinterschneidung (14) des Bohrlochs (11) entsprechenden Spreizlappen (15) versehen ist und der eine koaxiale Bohrung (16) zum Einbringen eines Bolzens (17) aufweist, der die Spreizlappen (15) praktisch über deren gesamte Länge abstützt, **dadurch gekennzeichnet**, daß der Dübel (12) eine glatt durchgehende Bohrung (16) aufweist und daß der Bolzen (17) ein auf seiner Mantelfläche (18) gewindefreier glatter Einschlagbolzen ist, dessen äußeres Ende (19) mit dem äußeren Dübelende (20) axial etwa gleichliegend angeordnet ist.

2. Befestigungseinrichtung nach Anspruch 1, **dadurch gekennzeichnet**, daß der Dübel (12) knapp bohrungslang und der Bolzen (17) knapp dübellang ist.

3. Befestigungseinrichtung nach Anspruch 1 oder 2, **dadurch gekennzeichnet**, daß der Dübel (12) an seinem äußeren Dübelende (20) einen Ringkragen (21) aufweist, der radial bedarfsweise weiter vorspringt, als die Spreizlappen (15) des Dübels (12).

4. Befestigungseinrichtung nach einem oder mehreren der Ansprüche 1 bis 3, **dadurch gekennzeichnet**, daß der Ringkragen (21) des Dübels (12) eine mit einem Bohrlochträger (22) zu verbindende Halterung (23) hintergreift.

5. Befestigungseinrichtung nach einem oder mehreren der Ansprüche 1 bis 4, **dadurch gekennzeichnet**, daß zwischen dem Bohrlochträger (22) und der Halterung (23) eine elastische Zwischenlage (24) angeordnet ist, mit der die Halterung (23) gegen den Ringkragen (21) des in den Bohrlochträger (22) eingesetzten Dübels (12) gedrückt ist.

6. Befestigungseinrichtung nach einem oder mehreren der Ansprüche 1 bis 5, **dadurch gekennzeichnet**, daß die Längsschlitze (25) des Dübels (12) außerhalb der Dicke des Ringkragens (21) enden.

7. Befestigungseinrichtung nach einem oder mehreren der Ansprüche 1 bis 6, **dadurch gekennzeichnet**, daß der Bolzen (17) an seinem äußeren Ende (19) in den Dübel (12) eingrabbare Kerbvorsprünge (26) aufweist.

8. Befestigungseinrichtung nach einem oder mehreren der Ansprüche 1 bis 7, **dadurch gekennzeichnet**, daß der Bolzen (17) mit dem Dübel (12) verklebt ist.

9. Befestigungseinrichtung nach einem oder mehreren der Ansprüche 1 bis 8, **dadurch gekennzeichnet**, daß der Bolzen (17) an seinem äußeren Ende (19) einen radial vorspringenden Tiefenanschlag (27) hat, dessen Außendurchmesser (28) dem Außendurchmesser (29) des Ringkragens (21) des Dübels (12) entspricht.

10. Befestigungseinrichtung nach einem oder mehreren der Ansprüche 1 bis 9, **dadurch gekennzeichnet,** daß eine den Bolzen (17) übergreifende, bedarfsweise mit ihm und/oder mit dem Ringkragen (21) verklebte Sicherungskappe (30) vorhanden ist, die mit dem Ringkragen (21) des Dübels (12) verrastet ist.

11. Befestigungseinrichtung nach einem oder mehreren der Ansprüche 1 bis 11, **dadurch gekennzeichnet,** daß der Bolzen (17) an seinem inneren Ende (42) einen flachen Ringvorsprung (46) hat, der in Einbaulage des Bolzens (17) in eine am inneren Ende (13) des Dübels (12) vorhandene Ringnut (47) einschnappt.

12. Befestigungseinrichtung nach einem oder mehreren der Ansprüche 1 bis 12, **dadurch gekennzeichnet**, daß die den Ringvorsprung (41) aufweisende Hälfte (44) des aus Metall bestehenden Bolzens (17) etwas konisch ist.

13. Befestigungseinrichtung nach einem oder mehreren der Ansprüche 1 bis 12, **dadurch gekennzeichnet,** daß der Ringkragen (21) des Dübels (12) ein Gewinde (44) hat, auf dem eine Spannmutter (45) dübelachsparallel zum Festspannen der Halterung (23) am Bohrlochträger (22) schraubverstellbar ist.

## Claims

1. Securing device (10) in a blind undercut hole (11) of a hole carrier, such as a thin ceramic plate, which is sensitive to explosive force, and arranged in the hole (11) of said hole carrier is a plug (12) which is provided on its end towards the hole base with a longitudinal slot and on its inner end (13) with expansion tabs (15) which correspond to the shape of the undercut (14) of the hole (11) and which plug comprises a coaxial bore (16) for the purpose of receiving a bolt (17) which supports the expansion tabs (15) virtually over their entire length, characterised in that the plug (12) comprises a smooth through-going bore (16) and that the bolt (17) is a smooth knock-in type pin whose peripheral surface (18) is unthreaded and whose outer end (19) is arranged axially in a manner approximately identical to that of the outer plug end (20).

2. Securing device according to claim 1, characterised in that the plug (12) is almost the length of the bore and the bolt (17) is almost the length of the plug.

3. Securing device according to claim 1 or 2, characterised in that the plug (12) comprises at its outer plug end (20) an annular collar (21) which protrudes radially as required further than the expansion tabs (15) of the plug (12).

4. Securing device according to any one or several of claims 1 to 3, characterised in that the annular collar (21) of the plug (12) engages behind a retaining device (23) which is to be connected to a hole carrier (22).

5. Securing device according to any one or several of claims 1 to 4, characterised in that an elastic intermediate layer (24) is arranged between the hole carrier (22) and the retaining device (23) and the said intermediate layer presses the retaining device (23) against the annular collar (21) of the plug (12) inserted into the hole carrier (22).

6. Securing device according to any one or several of the claims 1 to 5, characterised in that the longitudinal slots (25) of the plug (12) terminate outside the thickness of the annular collar (21).

7. Securing device according to any one or several of claims 1 to 6, characterised in that the bolt (17) comprises at its outer end (19) notch projections (26) which can grip into the plug (12).

8. Securing device according to any one or several of claims 1 to 7, characterised in that the bolt (17) is adhered to the plug (12).

9. Securing device according to any one or several of claims 1 to 8, characterised in that the bolt (17) comprises at its outer end (19) a radially protruding insertion depth stop (27) whose outer diameter (28) corresponds to the outer diameter (29) of the annular collar (21) of the plug (12).

10. Securing device according to any one or several of claims 1 to 9, characterised in that a securing cap (30) is provided which engages over the bolt (17) and is as required adhered to said bolt and/or to the annular collar (21) and is locked with the annular collar (21) of the plug (12).

11. Securing device according to any one or several of claims 1 to 11*, characterised in that the bolt (17) has at its inner end (42) a flat annular projection (46) which snaps into an annular groove (47), provided at the inner end (13) of the plug (12), when the bolt (17) is fitted into position.

12. Securing device according to any one or several of claims 1 to 12*, characterised in that the half (44) of the metal bolt (17) which comprises the annular projection (41) is approximately conical.

13. Securing device according to any one or several of claims 1 to 12, characterised in that the annular collar (21) of the plug (12) comprises a thread (44) on which an adjusting nut (45) can be screw-adjusted in a manner parallel to the axis of the plug for the purpose of holding the retaining device (23) on the hole carrier (22).

## Revendications

1. Dispositif de fixation (10) dans un perçage borgne dépouillé (11) d'un support de trou sensible à une force d'écartement comme une mince plaque en céramique dans le perçage (11) de laquelle est disposée une cheville (12) qui est fendue longitudinalement, du côté du fond du perçage, qui est pourvue, à son extrémité intérieure (13), de pattes d'écartement (15) adaptées à la forme de la dépouille (14) du perçage (11) et qui présente un perçage coaxial (16) destiné à l'introduction d'un axe (17), lequel axe (17) supporte les pattes d'écartement (15) pratiquement sur toute leur longueur, **caractérisé** en ce que la cheville (12) présente un perçage traversant lisse (16) et en ce que l'axe (17) est un axe à enfoncer lisse et sans filetage sur sa surface latérale (18), dont l'extrémité extérieure (19) est à peu près dans l'alignement axial de la cheville extérieure (20).

2. Dispositif de fixation selon la revendication 1, **caractérisé** en ce que la cheville (12) présente juste la longueur du perçage et l'axe (17) présente juste la longueur de la cheville.

3. Dispositif de fixation selon la revendication 1 ou 2, **caractérisé** en ce que la cheville (12) présente à son extrémité extérieure (20) une collerette annulaire (21) qui, au besoin, fait davantage saillie, radialement, que les pattes d'écartement (15) de la cheville (12).

4. Dispositif de fixation selon l'une au moins des revendications 1 à 3, **caractérisé** en ce que la collerette annulaire (21) de la cheville (12) vient en prise derrière une attache (23) à relier à un support de perçage (22).

5. Dispositif de fixation selon l'une au moins des revendications 1 à 4, **caractérisé** en ce qu'il est prévu, entre le support de perçage (22) et l'attache (23), une pièce intermédiaire élastique (24) grâce à laquelle l'attache (23) est pressée contre la collerette annulaire (21) de la cheville (12) placée dans le support de perçage (22).

6. Dispositif de fixation selon l'une au moins des revendications 1 à 5, **caractérisé** en ce que les fentes longitudinales (25) de la cheville (12) se terminent à l'extérieur de l'épaisseur de la collerette annulaire (21).

7. Dispositif de fixation selon l'une au moins des revendications 1 à 6, **caractérisé** en ce que l'axe (17) présente, à son extrémité extérieure (19), des saillies en forme de cannelures (26) aptes à s'enfoncer dans la cheville (12).

8. Dispositif de fixation selon l'une au moins des revendications 1 à 7, **caractérisé** en ce que l'axe (17) est collé à la cheville (12).

9. Dispositif de fixation selon l'une au moins des revendications 1 à 8, **caractérisé** en ce que l'axe (17) présente, à son extrémité extérieure (19), une butée de profondeur (27) saillant radialement dont le diamètre extérieur (28) correspond au diamètre extérieur (29) de la collerette (21) de la cheville (12).

10. Dispositif de fixation selon l'une au moins des revendications 1 à 9, **caractérisé** en ce qu'il est prévu un chapeau de sécurité (30) qui couvre l'axe (17), qui est éventuellement collé audit axe (17) et/ou à la collerette annulaire (21) et qui est enclenché avec la collerette annulaire (21) de la cheville (12).

11. Dispositif de fixation selon l'une au moins des revendications 1 à 10, **caractérisé** en ce que l'axe (17) présente, à son extrémité intérieure (42), une saillie annulaire plate (46) qui vient s'encliqueter, dans la position de montage de l'axe (17), dans une rainure annulaire (47) prévue à l'extrémité intérieure (13) de la cheville (12).

12. Dispositif de fixation selon l'une au moins des revendications 1 à 11, **caractérisé** en ce que la moitié (44) de l'axe en métal (17) qui est pourvue de la saillie annulaire (41) est légèrement conique.

13. Dispositif de fixation selon l'une au moins des revendications 1 à 12, **caractérisé** en ce que la collerette annulaire (21) de la cheville (12) a un filetage (44) sur lequel un écrou de serrage (45) est réglable par vissage parallèlement à l'axe de la cheville afin de serrer l'attache (23) contre le support de perçage (22).
